**Europäisches Patentamt**

**European Patent Office**

**Office européen des brevets**

(11) Veröffentlichungsnummer: **0 230 853**
**A1**

## (12) EUROPÄISCHE PATENTANMELDUNG

(21) Anmeldenummer: **86810029.8**

(22) Anmeldetag: **20.01.86**

(51) Int. Cl.⁴: **C04B 41/88** , C04B 41/90

(43) Veröffentlichungstag der Anmeldung:
**05.08.87 Patentblatt 87/32**

(84) Benannte Vertragsstaaten:
**AT BE CH DE FR GB IT LI LU NL SE**

(71) Anmelder: **W. Blösch AG**
**Moosstrasse 78**
**CH-2540 Grenchen(CH)**

(72) Erfinder: **Bachmann, Peter**
**Ruffinistrasse 7**
**CH-2540 Grenchen(CH)**

(74) Vertreter: **Seehof, Michel et al**
**c/o AMMANN PATENTANWAELTE AG BERN**
**Schwarztorstrasse 31**
**CH-3001 Bern(CH)**

(54) **Verfahren zur Herstellung einer lötfähigen Schicht aus einer Metallegierung auf einem Keramik-, insbesondere Oxydkeramiksubstrat.**

(57) Das Verfahren zeichnet sich dadurch aus, dass bei einem Druck von $10^{-8}$ bis $10^{-4}$ mBar eine reaktive Schicht aus beispielsweise CuO oder Titan mit einer Schichtdicke von mindestens 100 nm und darauf, im gleichen Arbeitsgang, eine zweite Schicht aus Kupfer, Silber, Gold oder Nickel mit einer Schichtdicke von mindestens 100 nm aufgedampft wird und die zweite Schicht chemisch oder elektrochemisch verstärkt wird, bis eine Schichtdicke von 0,004 bis 0,020 mm erreicht wird und anschliessend der eigentliche Verbindungsschritt in einem Ofen mit Schutzgasatmosphäre durchgeführt wird. Dabei wird eine Temperatur gewählt, die zwischen der eutektischen Temperatur des Materials der ersten Schicht und dem Metal der zweiten Schicht einerseits und der Schmelztemperatur des Metalls der zweiten Schicht andererseits liegt, woraufhin nach einer Haltezeit von ungefähr 1 Minute - schonend abgekühlt wird.

Damit kann eine vollständig blasenfreie, sehr gut auf Substratoberflächen verschiedener Rauhigkeiten haftende, lötfähige Schicht erzielt werden.

EP 0 230 853 A1

## Verfahren zur Herstellung einer lötfähigen Schicht aus einer Metallegierung auf einem Keramik-, insbesondere Oxydkeramik-Substrat

Es sind verschiedene Verfahren bekannt, um eine lötfähige Metallschicht auf ein Oxydkeramik-Substrat aufzubringen, um dieses dann mit einem anderen Metallteil zu verbinden. Beispielsweise ist das Molybdän-Mangan-Verfahren bekannt, bei welchem eine Paste, bestehend aus Molybdän-und Manganpulver und einem organischen Binder mittels Siebdruck oder einem Pinsel auf das Substrat aufgebracht wird. Danach wird das Substrat bei hoher Temperatur mit trockenem und feuchtem Wasserstoff behandelt, vernickelt und bei einer Temperatur um 900° C eingebrannt. Hochreine Oxydkeramiken können jedoch mit diesem Verfahren nicht behandelt werden, da dieses ein Gehalt von mindestens 2% $SiO_2$ voraussetzt.

Zum Verbinden von Keramikteilen mit Metall können auch sogenannte Aktivlote verwendet werden. Ein solcher Aktivlot für Keramik ist beispielsweise Titan, wobei das Löten im Vakuum erfolgt, denn das unedle Metall vermag die keramischen Massen oberflächlich zu reduzieren, wodurch eine besonders innige Verbindung bewirkt wird. Titan hat jedoch einen für die übliche Löttechnik zu hohen Schmelzpunkt, das auch in Form von Manteldrähten kein zuverlässiges Schmelzen des Lotes erlaubt, wodurch oft fehlerhafte Lötstellen entstehen. Ausserdem bilden sich gerne Blasen zwischen dem Keramik-Substrat und dem Metall. Ausserdem ist für die Durchführung dieses Verfahrens eine spezielle Hochvakuumlötanlage notwendig.

Als Lot können auch reine Metalle wie zum Beispiel Kupfer und seine Legierungen verwendet werden. Voraussetzung dabei ist eine oxydierende Atmosphäre während dem Lötvorgang. Die dabei entstehenden Oxydhäute aus den im Lot enthaltenen Nicht-Edelmetallen bewirken eine Be netzung der Keramik. In Abwandlung dieses Verfahrens können auch voroxydierte Kupferbleche auf die Keramik-Substrate gelegt werden, die einen Durchlaufofen mit verschiedenen Heizzonen durchlaufen. Dabei befindet sich jede Heizzone in einer genau vorbestimmten Atmosphäre aus Stickstoff und Sauerstoff, wodurch eine Oxydierung der Lotrückseite weitgehend vermieden werden kann. Bei diesem Verfahren besteht die Gefahr der Blasenbildung und unebene Teile können nur schwer oder überhaupt nicht verlötet werden.

Schliesslich können Metallschichten auch aufgedampft werden, wobei auf das Substrat zunächst eine Haftschicht, meistens Chromoxyd aufgedampft und im gleichen Arbeitsgang anschliessend weitere Metallschichten wie Gold, Nickel und/oder Kupfer aufgebracht werden. Die letzte Schicht kann dann noch chemisch oder elektrochemisch verstärkt und mit einem lötfreundlichen Belag versehen werden. Dieses Verfahren eignet sich sehr gut auf polierten Substraten, wie beispielsweise Saphirgläsern oder Aluminiumoxydkeramik oder auf feingeläppten Metallkeramik-Substraten. Mit zunehmender Oberflächenrauhigkeit jedoch nimmt die Haftfestigkeit ab, bis zu unbrauchbaren Werten.

Es ist demgegenüber Aufgabe der vorliegenden Erfindung ein Verfahren zur Herstellung einer lötfähigen Schicht anzugeben, bei dem eine Blasenbildung verhindert wird und das es erlaubt, lötfähige Schichten sowohl auf hochreinen Oxydkeramik-Substraten als auch auf Keramik-Substraten mit relativ rauher Oberfläche anzubringen. Diese Aufgabe wird mit dem im Patentanspruch 1 definierten Verfahren gelöst. Die Erfindung wird im folgenden anhand einer Beschreibung eines erfindungsgemässen Verfahrens näher erläutert.

### Ausführungsbeispiel

In einer handslsüblichen Hochvakuumbedampfüngsanlage wird bei einem Druck von $10^{-3}$ bis $10^{-4}$ mBar auf einem gereinigten Oxydkeramik-Substrat als erste Schicht eine reaktive Schicht von CuO mit einer Dicke von mindestens 100 nm aufgedampft. Die Dicke der Schicht richtet sich nach der Oberflächengüte des Substrates, bei rauheren Oberflächen wird eine dickere Schicht aufgedampft. Anschliessend wird im gleichen Arbeitsgang eine zweite Schicht aus Cu, Ag oder Au von etwa gleicher Dicke aufgedampft. Das Substrat wird der Bedampfungsanlage entnommen und in einem geeigneten Bad wird die zweite Schicht chemisch oder elektrochemisch verstärkt, d.h., es wird eine Kupfer-, Silber-oder Goldschicht aufgebracht, die je nach Verwendungszweck eine Dicke von 0,004 bis 0,020 mm erreichen kann. Dieser Metallbelag haftet bereits gut auf dem Substrat. Anschliessend erfolgt der eigentliche Verbindungsprozess in einem Ofen mit einer Schutzgasatmosphäre. Als Schutzgas kann beispielsweise Stickstoff verwendet werden. Um eine gute Verbindung dieser Schicht und um einen absolut blasenfreien Belag zu erzielen, ist es wichtig, dass die Temperatur des Ofens genau eingestellt wird, und zwar zwischen der eutektischen Temperatur des Metalls und der reaktiven Schicht, d.h., des Kupferoxyds, einerseits und der Schmelztemperatur des Metalls der Metallschicht andererseits. Im Falle des Kupfer und Kupferoxyds liegt die eutektische Temperatur von Kupfer und Kupferoxyd bei 1065° C und die Schmelztemperatur von Kupfer bei 1083°C, was bedeutet, dass die Temperatur des Ofens dazwischen liegen muss, vorzugsweise bei einer Temperatur von 1068 bis 1078° C. Die Haltezeit beim Erreichen dieser Temperatur beträgt ca. 1 Minute und nachher wird schonend abgekühlt. Eine solchermassen hergestellte Schicht auf einem Substrat ist ohne weitere Behandlung lötbereit.

Falls wünschenswert, können noch weitere galvanische Be handlungen folgen, um beispielsweise Fusionssperren zusätzlichen Schichten beispielsweise aus Kupfer oder Nickel bestehen. Es ist aber auch möglich, diese zusätzlichen Schichten vor dem Einschmelzen im Ofen aufzubringen.

Wie aus dem oben beschriebenen Ausführungsbeispiel hervorgeht, weist das darin beschriebene Verfahren folgende Vorteile auf:
- Es wird ein absolut blasenfreier Metallbelag erzielt,
-der Metallbelag wird mit bekannten und gut beherrschbaren Verfahren erzeugt,
-die Atmosphäre im Lötofen hat auf die Haftfestigkeit praktisch keinen Einfluss,
-im gleichen Arbeitsgang kann jeder gewünschte Metallschichtaufbau erzielt werden und
-die Metallschicht kann ohne weiteres auch auf hochreine Metalloxydkeramiken aufgebracht werden.

Für die erste, reaktive Schicht kann ausser CuO beispielsweise àuch Titan, Zirkonium oder Hafnium verwendet werden und für die zweite Metallschicht auch Nickel. -

Das Verfahren beschränkt sich nicht nur auf Oxydkeramik, es kann auch für andere Keramiken verwendet werden.

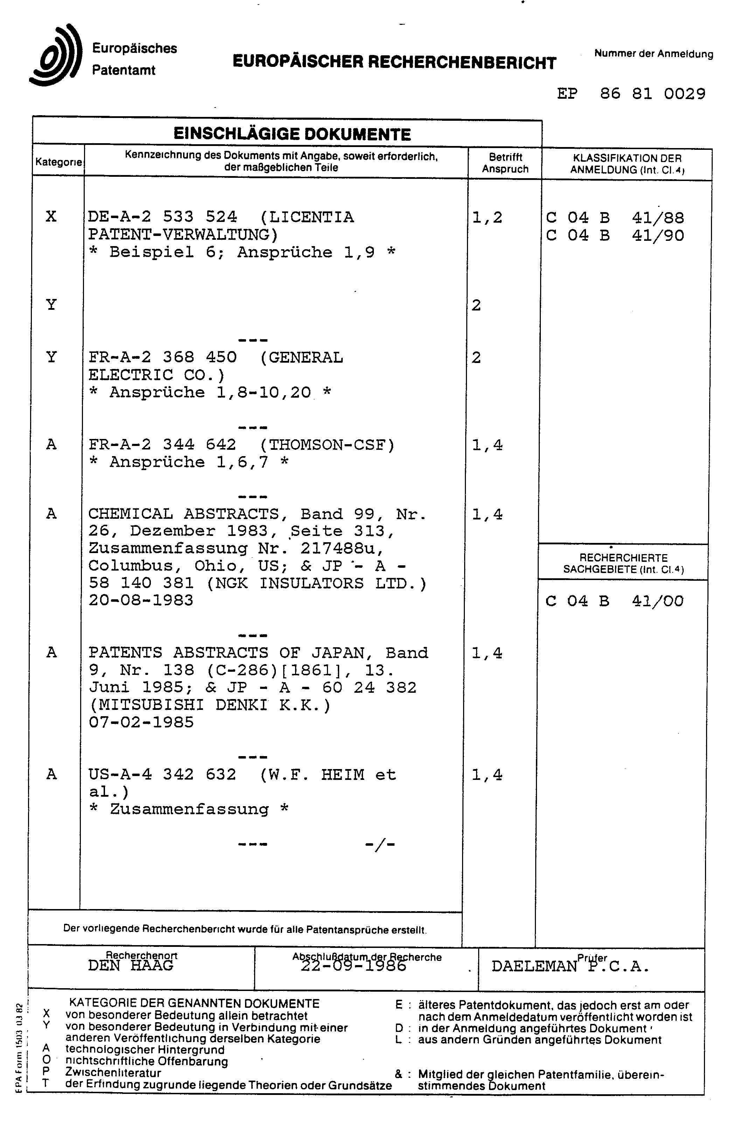

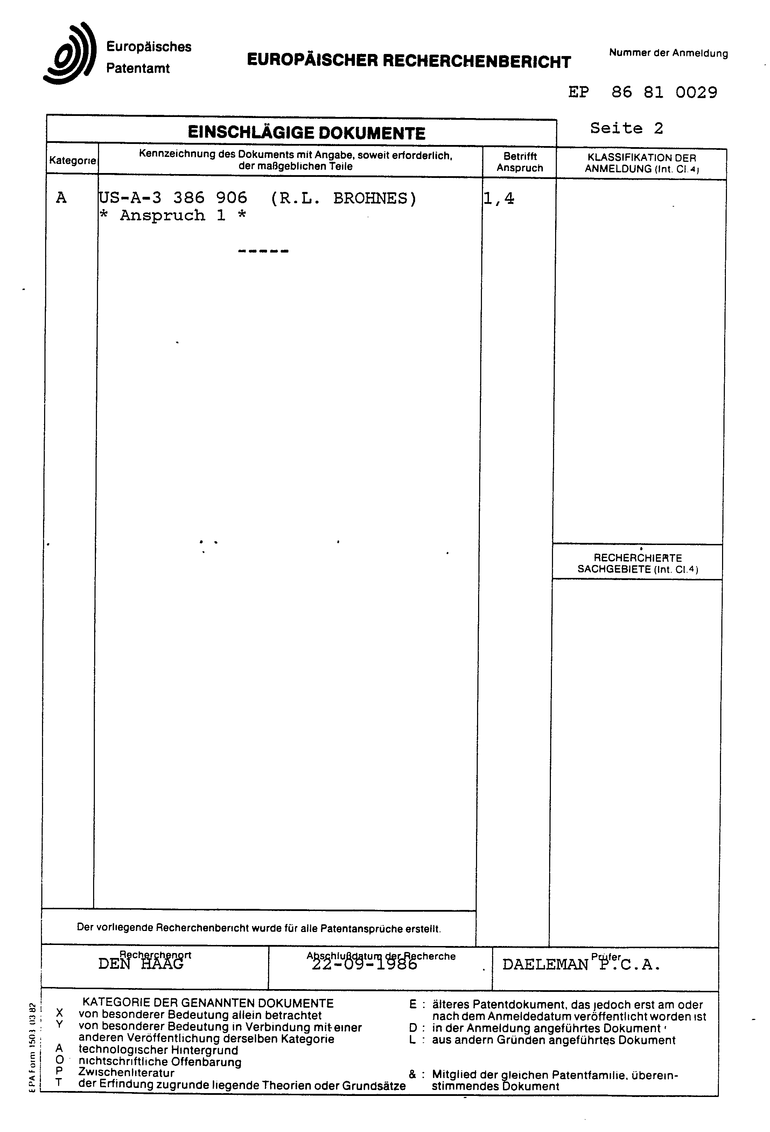

## Ansprüche

1. Verfahren zur Herstellung einer lötfähigen Schicht aus einer Metallegierung auf einem Keramik-, insbesondere Oxydkeramik-Substrat, dadurch gekennzeichnet, dass bei einem Druck von $10^{-3}$ bis $10^{-4}$ mBar eine erste, reaktive Schicht aus der Gruppe CuO, Ti, Zr, Hf mit einer Schichtdicke von mindestens 100 nm und darauf, im gleichen Arbeitsgang, eine zweite Schicht aus der Gruppe Cu, Ag, Au, Ni mit einer Schichtdicke von mindestens 100 nm aufgedampft wird und die zweite Schicht chemisch oder elektrochemisch verstärkt wird, bis eine Schichtdicke von 0,004 bis 0,020 mm erreicht wird und anschliessend der eigentliche Verbindungsschritt in einem Ofen mit Schutzgasatmosphäre durchgeführt wird, wobei eine Temperatur gewählt wird, die zwischen der eutektischen Temperatur des Materials der ersten Schicht und dem Metal der zweiten Schicht einerseits und der Schmelztemperatur des Metalls der zweiten Schicht andererseits liegt, woraufhin nach einer Haltezeit von ungefähr 1 Minute schonend abgekühlt wird.

2. Verfahren nach Anspruch 1, dadurch gekennzeichnet, dass als erste Schicht CuO verwendet wird und als zweite Schicht Cu aufgebracht wird, wobei die Temperatur des Ofens zwischen der eutektischen Temperatur von CuO und Cu von 1065° C und der Schmelztemperatur von Cu, 1083° C, eingestellt wird.

3. Verfahren nach Anspruch 2, dadurch gekennzeichnet, dass die Ofentemperatur auf 1068-1078° C eingestellt wird.

4. Verfahren nach Anspruch 1, dadurch gekennzeichnet, dass als erste Schicht Ti, Zr oder Hf und als zweite Schicht Cu, Ag oder Ni verwendet wird.

5. Verfahren nach einem der Ansprüche 1 bis 4, dadurch gekennzeichnet, dass vor oder nach dem Verbindungsschritt im Ofen auf galvanischem Wege Diffusionssperren oder Schutzschichten aus Cu oder Ni aufgebracht werden.

6. Verfahren nach Anspruch 5, dadurch gekennzeichnet, dass die Diffusionssperren oder Schutzschichten aus Cu oder Ni aufgebracht werden.

7. Verfahren nach einem der Ansprüche 1 bis 6, dadurch gekennzeichnet, dass als Schutzgas Stickstoff verwendet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 533 524 (LICENTIA PATENT-VERWALTUNG) * Beispiel 6; Ansprüche 1,9 * | 1,2 | C 04 B 41/88 C 04 B 41/90 |
| Y | | 2 | |
| Y | FR-A-2 368 450 (GENERAL ELECTRIC CO.) * Ansprüche 1,8-10,20 * | 2 | |
| A | FR-A-2 344 642 (THOMSON-CSF) * Ansprüche 1,6,7 * | 1,4 | |
| A | CHEMICAL ABSTRACTS, Band 99, Nr. 26, Dezember 1983, Seite 313, Zusammenfassung Nr. 217488u, Columbus, Ohio, US; & JP - A - 58 140 381 (NGK INSULATORS LTD.) 20-08-1983 | 1,4 | RECHERCHIERTE SACHGEBIETE (Int. Cl.4) C 04 B 41/00 |
| A | PATENTS ABSTRACTS OF JAPAN, Band 9, Nr. 138 (C-286)[1861], 13. Juni 1985; & JP - A - 60 24 382 (MITSUBISHI DENKI K.K.) 07-02-1985 | 1,4 | |
| A | US-A-4 342 632 (W.F. HEIM et al.) * Zusammenfassung * | 1,4 | |
| | --- -/- | | |

Der vorliegende Recherchenbericht wurde für alle Patentansprüche erstellt.

| Recherchenort DEN HAAG | Abschlußdatum der Recherche 22-09-1986 | Prüfer DAELEMAN P.C.A. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 386 906   (R.L. BROHNES) <br> * Anspruch 1 * <br><br> ----- | 1,4 | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 22-09-1986 | DAELEMAN P.C.A. |